# EUROPÄISCHE PATENTANMELDUNG

(11) **EP 4 450 680 A1**
(43) Veröffentlichungstag der Anmeldung: **23.10.2024**
(21) Anmeldenummer: 23020190.7
(22) Anmeldetag: 20.04.2023
(51) Int. Cl.: C25B 1/04, C25B 15/08, C01B 3/50, C01B 3/58, B01D 53/04, B01D 53/46

(54) **VERFAHREN UND ANLAGE ZUR HERSTELLUNG VON WASSERSTOFF**

(71) Anmelder: Linde GmbH, 82049 Pullach (DE)
(72) Erfinder: Winkler, Florian, 82049 Pullach (DE); Dillig, Marius, 82049 Pullach (DE)
(74) Vertreter: Fischer, Werner

(57) **Zusammenfassung**

Die Erfindung betrifft ein Verfahren (100) zur Erzeugung von Wasserstoff (103), wobei Einsatzwasser unter Erhalt eines Kathodengases (101) einer Elektrolyse (10) unterworfen wird, wobei das Kathodengas (101) Wasserstoff, Sauerstoff und einen Teil des Einsatzwassers enthält, wobei unter Verwendung zumindest eines Teils des Kathodengases (101) ein Prozessgasstrom (102) gebildet wird, wobei der Prozessgasstrom (102) zumindest einen Teil des in dem Kathodengas (101) enthaltenen Wasserstoffs, Sauerstoffs und Einsatzwassers enthält, und wobei in dem Prozessgasstrom (102) zumindest ein Teil des Sauerstoffs mit einem Teil des Wasserstoffs einer oxidativen katalytischen Umsetzung zu Oxidationswasser unterworfen wird, und wobei das Einsatzwasser und das Oxidationswasser in dem Prozessgasstrom (102) in einer Wasserentfernung zumindest zu einem Teil aus dem Prozessgasstrom (102) entfernt werden. Die katalytische Umsetzung und die Wasserentfernung werden hierbei unter Verwendung einer oder mehrerer Prozesseinheiten (41, 42) durchgeführt, wobei die eine Prozesseinheit (41, 42) oder jede der mehreren Prozesseinheiten (41, 42) ein erstes adsorptives Trocknungsbett (4a), mittels welchem zumindest ein Teil des Einsatzwassers aus dem Prozessgasstrom (102) entfernt wird, ein stromab des ersten Trocknungsbetts (4a) angeordnetes katalytisches Bett (4b), mittels welchem die katalytische Umsetzung durchgeführt wird, und ein stromab des katalytischen Bettes angeordnetes zweites adsorptives Trocknungsbett (4c), mittels welchem zumindest ein Teil des Oxidationswassers aus dem Prozessgasstrom (102) entfernt wird, aufweist. Eine entsprechende Anlage (100) ist ebenfalls Gegenstand der Erfindung.

## Beschreibung

Die Erfindung betrifft ein Verfahren und eine Anlage zur Herstellung von Wasserstoff.

### Hintergrund der Erfindung

Die Wasserstoffherstellung im industriellen Maßstab basiert derzeit hauptsächlich auf Kohlenwasserstoffen und umfasst beispielsweise die Dampfreformierung von Erdgas. Anstelle einer erneuten Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry (2012) verwiesen.

Um regenerativ erzeugten elektrischen Strom nutzen und Kohlendioxidemissionen reduzieren zu können, wird zunehmend auch die Wasserelektrolyse zur Herstellung von Wasserstoff eingesetzt. Auch Sauerstoff kann durch Wasserelektrolyse hergestellt werden. Entsprechende Verfahren werden unten eingehender erläutert.

Bei entsprechenden Elektrolyseverfahren wird kathodenseitig typischerweise ein wassergesättigter Gasstrom bei moderaten Temperaturen und Drücken bereitgestellt, der neben Wasserstoff als Hauptbestandteil auch beträchtliche Mengen Sauerstoff aufweisen kann. Um den Sauerstoff zu entfernen, kann eine katalytische Umsetzung, üblicherweise auch als CatOx bezeichnet, vorgesehen sein.

In bestimmten Fällen kann sich die katalytische Umsetzung als hinsichtlich der Betriebsflexibilität und anderer Aspekte als einschränkend bzw. nachteilig erweisen. Es besteht daher der Bedarf nach Verfahren, in denen die katalytische Umsetzung in gegenüber dem Stand der Technik vorteilhafter Weise durchgeführt werden kann.

### Offenbarung der Erfindung

Vor diesem Hintergrund werden ein Verfahren und eine Anlage zur Herstellung von Wasserstoff mit den Merkmalen der unabhängigen Patentansprüche vorgeschlagen. Ausgestaltungen sind Gegenstand der abhängigen Patentansprüche und der nachfolgenden Beschreibung.

Vor der Erläuterung der Merkmale und Vorteile der vorliegenden Erfindung werden einige Grundlagen der vorliegenden Erfindung näher erläutert und einige bei der Beschreibung der Erfindung verwendete Begriffe definiert.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), wobei das zu elektrolysierende Wasser an der Anodenseite bereitgestellt wird. Auch die Elektrolyse unter Verwendung von Anionenaustauschermembranen (AEM, Anion Exchange Membrane) ist bekannt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden kann. Letztere umfassen insbesondere dotiertes Zirkondioxid oder Oxide anderer seltener Erden, die bei höheren Temperaturen leitfähig werden.

Der Begriff der Elektrolyse soll nachfolgend sämtliche dieser Verfahren umfassen. Insbesondere die Niedertemperaturelektrolyse (PEM, AEL, AEM) eignet sich für einen flexiblen Betrieb, der den Energieübergang zu erneuerbaren Energien unterstützt. Sämtliche Verfahren können in der Erfindung eingesetzt werden, sofern hier die durch die Erfindung addressierten Probleme auftreten.

In den genannten Elektrolyseverfahren können Elektrolyseeinrichtungen verwendet werden, die eine Vielzahl von Elektrolysezellen aufweisen, wobei die Elektrolysezellen insbesondere Teil eines oder mehrerer Elektrolysezellstapel (Stacks) bekannter Art sein können. In entsprechenden Elektrolysezellstapeln sind typischerweise identische Komponenten bereitgestellt, insbesondere Anoden, Kathoden und Trennelemente. Die Elektrolysezellstapel sind insbesondere fluidisch parallel geschaltet. Damit sind Einspeise- bzw. Sammelleitungen bereitgestellt, die den oder die Elektrolysezellstapel insgesamt versorgen. Auch mehrere Zellstapel können in einer entsprechenden Elektrolyseeinrichtung vorhanden sein.

Unter einem hier als Kathodengas bezeichneten Gasgemisch soll dabei das kathodenseitig dem oder den Zellstapeln insgesamt entnommene Gas oder ein Teil hiervon verstanden werden. Dieses ist, wie erwähnt, typischerweise wassergesättigt und liegt auf erhöhtem Druck und erhöhter Temperatur vor.

Bei einer Elektrolyse wird also nicht reiner Wasserstoff als Kathodengas erzeugt. Vielmehr enthält dieses Wasser, das bei den typischerweise vorherrschenden 50 bis 80 °C und 10 bis 40 bar Überdruck wassergesättigt ist, sowie zusätzlich Sauerstoff. Die Menge des Sauerstoffs im Kathodengas hängt vom Druckunterschied zwischen der Wasserstoffseite und der Sauerstoffseite und der Belastung (Stromdichte) des Elektrolyseurs ab. Er kann bei der alkalischen Elektrolyse 1.000 vppm (Millionstel Volumenanteile) im Wasserstoff bzw. dem aus Wasserstoff und Sauerstoff gebildeten Teilen überschreiten und liegt bei der Wasserelektrolyse unter Verwendung von Protonenaustauschmembranen typischerweise in einem Bereich von 100 vppm Sauerstoff. Um das Kathodengas von beiden Verunreinigungen (Wasser und Sauerstoff) zu reinigen, sind im Allgemeinen die erwähnte katalytische Oxidation und eine sich anschließende Trocknung erforderlich.

Um flüssiges Wasser auf dem Katalysator zu vermeiden, ist hierfür herkömmlicherweise ein Vorwärmer erforderlich, der das Kathodengas auf mindestens 15 K über den Taupunkt am Katalysator aufheizt. Der Sauerstoff wird sodann in Gegenwart von Wasserstoff am Katalysator in Wasser umgewandelt.

Nachfolgend wird das aus der Elektrolyse kommende, mit dem Einsatz zufgeführte Wasser als Einsatzwasser bezeichnet, das am Katalysator oxidativ gebildete Wasser als Oxidationswasser. Es versteht sich, dass es sich bei dem im Kathodengas enthaltenen Einsatzwasser nur um einen geringen Teil des Wassers handelt, das der Elektrolyse insgesamt zugeführt wird.

Nach Abkühlung des Kathodengases auf typischerweise 10 bis 50 °C wird herkömmlicherweise ein Teil des enthaltenen Wassers (Einsatzwasser und Oxidationswasser gemeinsam) kondensiert, abgetrennt und abgeleitet. Der gebildete, sauerstoff- und wasserarme Strom wird einem Trockner auf Adsorptionsbasis zugeführt. Das Endprodukt kann anschließend auf den gewünschten Druck verdichtet oder an nachgeschaltete Anwendungen weitergeleitet werden.

Die Temperaturen des katalytischen Betts müssen bei dynamischer Wasserstofferzeugung in einem Standbybetrieb gehalten werden, um Wasserkondensation und Katalysatorschäden beim Wiederanfahren der Anlage zu vermeiden. Dies verursacht zusätzlichen Aufwand und/oder schränkt den dynamischen Betrieb ein, weil eine Standbyheizung des Reaktors oder zusätzliche Zeit für die Temperaturrampe im katalytischen Bett erforderlich sind. Die vorliegende Erfindung löst diese Probleme durch die Bereitstellung einer katalytischen Schicht bzw. eines katalytischen Betts innerhalb der erwähnten Trocknungsbetten.

Hierbei wird ein Verfahren zur Erzeugung von Wasserstoff vorgeschlagen, wobei Einsatzwasser unter Erhalt eines Kathodengases einer Elektrolyse unterworfen wird, wobei das Kathodengas Wasserstoff, Sauerstoff und einen Teil des Einsatzwassers enthält. Unter Verwendung zumindest eines Teils des Kathodengases wird ein Prozessgasstrom gebildet, der zumindest einen Teil des in dem Kathodengas enthaltenen Wasserstoffs, Sauerstoffs und Einsatzwassers enthält, wobei in dem Prozessgasstrom zumindest ein Teil des Sauerstoffs mit einem Teil des Wasserstoffs einer oxidativen katalytischen Umsetzung zu Oxidationswasser unterworfen wird, und wobei das Einsatzwasser und das Oxidationswasser in dem Prozessgasstrom in einer Wasserentfernung zumindest zu einem Teil hieraus entfernt werden.

Mit der "Bildung des Prozessgasstroms" soll dabei insbesondere zum Ausdruck gebracht werden, dass im Rahmen der vorliegenden Erfindung eine gewisse Bearbeitung des Kathodengases, beispielsweise wie nachfolgend erläutert eine Abkühlung und ein Auskondensieren von Wasser, vorgesehen sein kann, und dass nicht das gesamte Kathodengas entsprechend verwendet werden muss. Der Prozessgasstrom kann aber auch das gesamte Kathodengas in im Wesentlichen unbehandelter bzw. ungetrennter Form umfassen.

Die katalytische Umsetzung und die Wasserentfernung wird in dem vorgeschlagenen Verfahren unter Verwendung einer oder mehrerer Prozesseinheiten durchgeführt, wobei die eine Prozesseinheit oder jede der mehreren Prozesseinheiten ein erstes adsorptives Trocknungsbett, mittels welchem zumindest ein Teil des Einsatzwassers aus dem Prozessgasstrom entfernt wird, ein stromab des ersten Trocknungsbetts angeordnetes katalytisches Bett, mittels welchem die katalytische Umsetzung durchgeführt wird, und ein stromab des katalytischen Bettes angeordnetes zweites adsorptives Trocknungsbett, mittels welchem zumindest ein Teil des Oxidationswassers aus dem Prozessgasstrom entfernt wird, aufweist

Ein "Bett" soll im hier verstandenen Sinn eine Anordnung von Partikeln oder Trägerkörpern bezeichnen, im Fall eines adsorptiven Trocknungsbetts insbesondere eine Schüttung oder anderweitige Anordnung aus partikulärem Adsorptionsmaterial beliebiger Art, und im Fall eines katalytischen Betts insbesondere eine Schüttung aus Katalysatorträgerkörpern beliebiger Art.

Es hat sich im Rahmen der vorliegenden Erfindung herausgestellt, dass ein zwischen entsprechende Trocknungsbetten zwischengeschaltetes katalytisches Bett innerhalb von beispielsweise Adsorptionstrocknern aufgrund der trockenen Betriebsbedingungen des Katalysators besonders effektiv ist. Zusätzliches Trocknermaterial stromabwärts des katalytischen Betts stellt sicher, dass das durch die Oxidationsreaktion von Sauerstoff mit Wasserstoff gebildete Oxidationswasser zuverlässig entfernt werden kann. Darüber hinaus ist in dem vorgeschlagenen Verfahren kein separater Reaktor für die katalytische Umsetzung stromaufwärts der Trockner erforderlich, und es ist kein Vorheizen über den Taupunkt des Wassers im Wasserstoff oder eine Beheizung des für die katalytische Umsetzung eingesetzten Reaktors notwendig. Dies hat insbesondere einen positiven Einfluss auf die dynamische Betriebsfähigkeit einer entsprechenden Anlage sowie deren Erstellungs- und Betriebskosten.

In Ausgestaltungen der vorliegenden Erfindung kann insbesondere vorgesehen sein, dass der Prozessgasstrom der einen oder den mehreren Prozesseinheiten auf einem Einspeisetemperaturniveau von 10 bis 50 °C und insbesondere auf einem Einspeisedruckniveau von 10 bis 40 bar über Atmosphärendruck zugeführt wird. Insbesondere mit einem entsprechenden Einspeisetemperaturniveau kann ein Abscheiden eines Teils des Einsatzwassers stromauf vorgenommen werden.

Daher sehen Ausgestaltungen der vorliegenden Erfindung insbesondere vor, dass das Bilden des Prozessgasstroms ein Abkühlen des Kathodengases oder eines Teils hiervon von einem Temperaturniveau von 50 bis 80 °C auf das Einspeisetemperaturniveau und ein kondensatives Abscheiden von Wasser umfasst. Wie erwähnt, kann der Prozessgasstrom in einer Elektrolyse insbesondere wassergesättigt bereitgestellt werden.

Die vorliegende Erfindung kann in Ausgestaltungen insbesondere umfassen, dass der Prozessgasstrom mit einem Sauerstoffgehalt von 20 bis 500 Millionstel Volumenanteilen bereitgestellt wird. Die katalytische Entfernung von Sauerstoff ist exotherm und erzeugt Wasser. Dieser Umstand wirkt sich auf die Größe bzw. den Bedarf des Trocknermaterials stromab der katalytischen Schicht aus. Besondere Vorteile werden hier bei niedrigen Sauerstoffkonzentrationen erzielt.

Die Elektrolyse kann im Rahmen der vorliegenden Erfindung insbesondere als eine alkalische Elektrolyse durchgeführt werden oder eine solche umfassen und/oder die Elektrolyse kann als eine Elektrolyse unter Verwendung einer Protonenaustauschmembran durchgeführt werden oder eine solche umfassen. Insbesondere mittels einer Elektrolyse mit Protonenaustauschmembran können die erwähnten, besonders günstigen geringen Sauerstoffgehalte erreicht werden.

In Ausgestaltungen der vorliegenden Erfindung können wenigstens zwei der Prozesseinheiten bereitgestellt sein, welche zyklisch mit dem Prozessgasstrom oder Teilen hiervon durchströmt werden, wie an sich bei Adsorbern bzw. Trocknern bekannt, beispielsweise in sogenannten Prepurification Units von Luftzerlegungsanlagen.

Bei entsprechenden Trocknungsverfahren macht man sich die Temperaturabhängigkeit von Adsorptionsvorgängen zunutze. Ein Adsorbens, das in einem geeigneten Adsorberbehälter untergebracht ist, wird dabei in einem Betriebstakt auf einem niedrigeren Temperaturniveau mit dem zu trocknenden Prozessgasstrom durchströmt und hierbei mit dem Wasser aus dem Prozessgasstrom beladen. In einem nachfolgenden Betriebstakt kann das Adsorbens dann durch Erwärmen, d.h. Einbringen thermischer Energie, von dem Wasser wieder weitgehend befreit und auf diese Weise "regeneriert" werden. Für den kontinuierlichen Betrieb sind daher mindestens zwei Adsorptionseinheiten erforderlich, damit stets eine mit dem zu trennenden Gasgemischstrom durchströmt und damit zur Trennung des Gasgemischstroms verwendet werden kann. Entsprechendes gilt auch für die hier vorgeschlagenen Prozesseinheiten mit zusätzlichem katalytischen Bett.

Auch im Rahmen der vorliegenden Erfindung können also das erste Trocknungsbett und das zweite Trocknungsbett jeweils ein zur Adsorptionstrocknung eingerichtetes Material aufweisen. Die Materialien können gleich oder unterschiedlich sein.

Der Wassergehalt in dem Prozessgasstrom kann in Ausgestaltungen der vorliegenden Erfindung mittels des ersten Trocknungsbetts auf einen Gehalt von weniger als 100 Millionstel Volumenanteile verringert werden, wodurch sich die nachfolgende katalytische Umsetzung besonders vorteilhaft und effektiv gestaltet.

Die vorgeschlagene Anlage zur Erzeugung von Wasserstoff ist dafür eingerichtet, Einsatzwasser unter Erhalt eines Kathodengases einer Elektrolyse zu unterwerfen, wobei das Kathodengas Wasserstoff, Sauerstoff und einen Teil des Einsatzwassers enthält. Die Anlage ist ferner dafür eingerichtet, unter Verwendung zumindest eines Teils des Kathodengases einen Prozessgasstrom zu bilden, der zumindest einen Teil des in dem Kathodengas enthaltenen Wasserstoffs, Sauerstoffs und Einsatzwassers umfasst, und in diesem zumindest einen Teil des Sauerstoffs mit einem Teil des Wasserstoffs einer oxidativen katalytischen Umsetzung zu Oxidationswasser zu unterwerfen. Die Anlage ist ferner dafür eingerichtet, das Einsatzwasser und das Oxidationswasser in dem Prozessgasstrom in einer Wasserentfernung zumindest zu einem Teil aus dem Prozessgasstrom zu entfernen.

Die vorgeschlagene Anlage ist dafür eingerichtet, die katalytische Umsetzung und die Wasserentfernung unter Verwendung einer oder mehrerer Prozesseinheiten durchzuführen, wobei die eine Prozesseinheit oder jede der mehreren Prozesseinheiten ein erstes adsorptives Trocknungsbett, das zur Entfernung zumindest eines Teils des Einsatzwassers aus dem Prozessgasstrom eingerichtet ist, ein stromab des ersten Trocknungsbetts angeordnetes katalytisches Bett, das zur Durchführung der katalytischen Umsetzung eingerichtet ist, und ein stromab des katalytischen Bettes angeordnetes zweites adsorptives Trocknungsbett, das zur Entfernung zumindest eines Teils des Oxidationswassers aus dem Prozessgasstrom eingerichtet ist, aufweist.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung unter Erläuterung des technischen Hintergrunds beschrieben.
Figur 1 veranschaulicht ein Verfahren bzw. eine Anlage gemäß einer nicht erfindungsgemäßen Ausführungsform.
Figur 2 veranschaulicht ein Verfahren bzw. eine Anlage gemäß einer Ausführungsform der vorliegenden Erfindung.
Figur 3 veranschaulicht die Leistung eines Katalysators in einem Ausführungsbeispiel der vorliegenden Erfindung.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

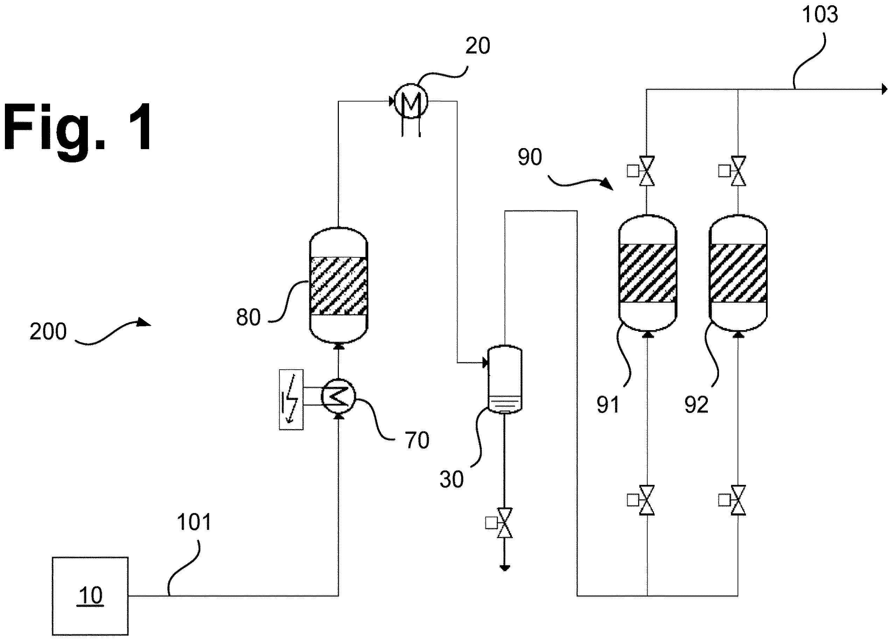

Figur 1 veranschaulicht ein Verfahren bzw. eine Anlage 200 gemäß einer nicht erfindungsgemäßen Ausführungsform.

Wie hier veranschaulicht, wird unter Verwendung einer mit 10 bezeichneten Elektrolyse, insbesondere der zuvor erläuterten vorteilhaften Art, ein Kathodengas 101 bereitgestellt. Dieses wird in einer Heizeinrichtung 70 erwärmt, bevor es einem Katalysereaktor 80 zugeführt wird. Wie erwähnt, enthält das Kathodengas 101 Einsatzwasser und, stromab des Katalysereaktors 80, auch Oxidationswasser.

Durch eine Abkühlung 20 des Kathodengases 101 kann in einem Abscheider 140 ein Teil des Wassers aus diesem abgeschieden werden. Das entsprechend teilgetrocknete Kathodengas wird in einem Paar von Adsorberbehältern 91, 92 in einer Trocknungseinheit 90 endgetrocknet. Auf diese Weise enthält man im Wesentlichen sauerstofffreien, getrockneten Wasserstoff 103.

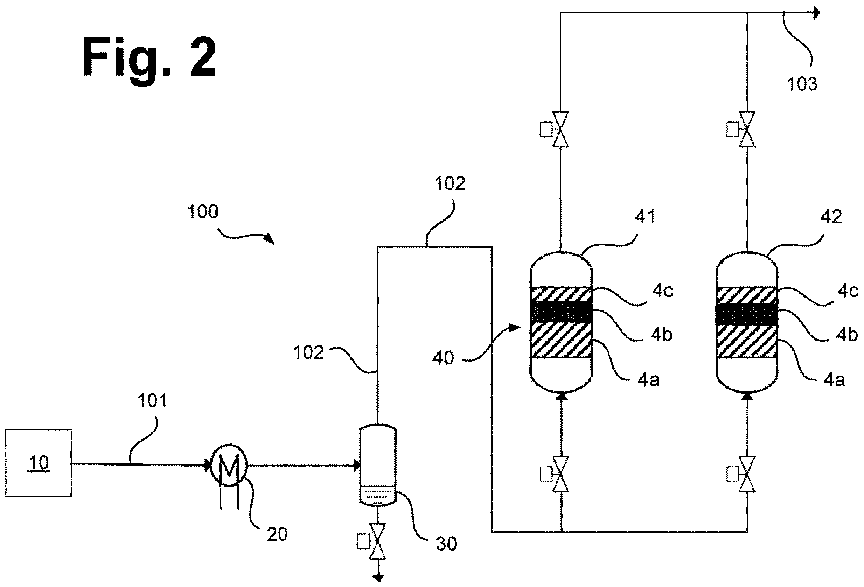

In Figur 2 ist ein Verfahren bzw. eine Anlage gemäß einer Ausgestaltung der vorliegenden Erfindung veranschaulicht und insgesamt mit 100 bezeichnet.

Wie in Figur 2 dargestellt, erfolgt in dieser Ausgestaltung in einem ersten Schritt eine Abkühlung 20 des Kathodengases 101 aus der Elektrolyse 10, insbesondere unter Verwendung von Kühlwasser und in der zuvor erwähnten Weise, und anschließend in einem Abscheider 30 eine Abscheidung von Wasser, wodurch ein Prozessgasstrom 102 erhalten wird. Dieser wird nun alternierend zwei Prozesseinheiten 41, 42 einer Prozessanordnung 40 zugeführt. Der Prozessgasstrom 102 weist bei der Einspeisung in die Prozessanordnung 40 Einsatzwasser, aber noch kein Oxidationswasser auf.

Jede der Prozesseinheiten 41, 42 weist in dem hier veranschaulichten Beispiel ein erstes adsorptives Trocknungsbett 4a, mittels welchem zumindest ein Teil des Einsatzwassers aus dem Prozessgasstrom 102 entfernt wird, ein stromab des ersten Trocknungsbetts 4a angeordnetes katalytisches Bett 4b, mittels welchem die katalytische Umsetzung durchgeführt wird, und ein stromab des katalytischen Bettes 4b angeordnetes zweites adsorptives Trocknungsbett 4c, mittels welchem zumindest ein Teil des Oxidationswassers aus dem Prozessgasstrom 102 entfernt wird, auf. Mit einer derartigen Anordnung kann daher mit dem ersten Trocknungsbett 4a zunächst zumindest ein Teil des Einsatzwassers entfernt werden, so dass der Prozessgasstrom 102 das katalytische Bett 4b im Wesentlichen trocken erreicht. Das Oxidationswasser kann sodann stromab hiervon entfernt werden.

In einem Ausführungsbeispiel wurde die Leistung eines Katalysators für die katalytische Umsetzung von Sauerstoff der erwähnten Art in Abhängigkeit von einem Wasserstoffpartialdruck und einer stündlichen Gasraumgeschwindigkeit (engl. Gas Hourly Space Velocity, GHSV) untersucht.

Ein Einsatzgas mit 23 Volumenprozent Wasserstoff und 50 vppm Sauerstoff in Stickstoff wurde bei 25 °C über 20 ml eines entsprechenden Katalysators geleitet. Die stündliche Raumgeschwindigkeit des Gases wurde bei drei verschiedenen Systemdrücken (3,0, 4,8 und 10,0 bar Absolutdruck) von 14.000 auf 55.000 h⁻¹ erhöht. Geht man von einem Wasserstoffdruck von 20 bis 30 bar für die technische Anwendung aus, ist eine GHSV von über 50.000 h⁻¹ für die Wasserstoffreinigung mit einem O2-Gehalt von 100 vppm im Rohwasserstoff realistisch. Trockner besitzen eine GHSV von etwa 10.000 h⁻¹. Durch das katalytische Bett wird eine ungefähre Zunahme von weniger als 20 Volumenprozent des gesamten Trocknervolumens erreicht.

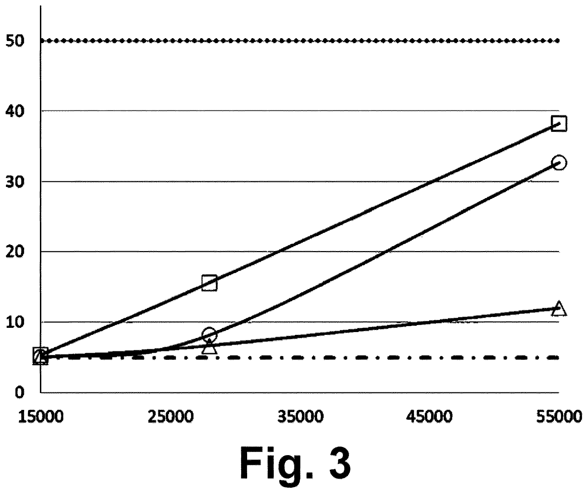

Die Ergebnisse sind in Figur 3 dargestellt, in der in einem Diagramm die stündliche Gasraumgeschwindigkeit auf der Horizontalachse in dimensionslosen Einheiten pro Stunde und ein Sauerstoffgehalt in Millionstel Volumenanteilen auf der Vertikalachse dargestellt sind. Die punktierte Linie gibt den Sauerstoffgehalt im zugeführten Prozessgasstrom an, die strichpunktierte Linie ein Detektionslimit. Mit quadratischen Datenpunkten ist der Sauerstoffgehalt bei einem Wasserstoffpartialdruck von 0,7 bar, mit runden Datenpunkten bei einem Wasserstoffpartialdruck von 1,1 bar, und mit dreieckigen Datenpunkten bei einem Wasserstoffpartialdruck von 2,3 bar dargestellt.

Das Beispiel beweist, dass der Katalysator zur Sauerstoffentfernung unter trockenen Bedingungen bei hohen Raumgeschwindigkeiten und sogar niedrigem Wasserstoffpartialdruck bei 25 °C zufriedenstellende Ergebnisse liefert. Daher ist er für den Einsatz in Trocknern zur Wasserstoffreinigung geeignet.

## Patentansprüche

1. Verfahren (100) zur Erzeugung von Wasserstoff (103), wobei Einsatzwasser unter Erhalt eines Kathodengases (101) einer Elektrolyse (10) unterworfen wird, wobei das Kathodengas (101) Wasserstoff, Sauerstoff und einen Teil des Einsatzwassers enthält, wobei unter Verwendung zumindest eines Teils des Kathodengases (101) ein Prozessgasstrom (102) gebildet wird, wobei der Prozessgasstrom (102) zumindest einen Teil des in dem Kathodengas (101) enthaltenen Wasserstoffs, Sauerstoffs und Einsatzwassers enthält, und wobei in dem Prozessgasstrom (102) zumindest ein Teil des Sauerstoffs mit einem Teil des Wasserstoffs einer oxidativen katalytischen Umsetzung zu Oxidationswasser unterworfen wird, und wobei das Einsatzwasser und das Oxidationswasser in dem Prozessgasstrom (102) in einer Wasserentfernung zumindest zu einem Teil aus dem Prozessgasstrom (102) entfernt werden, **dadurch gekennzeichnet, dass** die katalytische Umsetzung und die Wasserentfernung unter Verwendung einer oder mehrerer Prozesseinheiten (41, 42) durchgeführt wird, wobei die eine Prozesseinheit (41, 42) oder jede der mehreren Prozesseinheiten (41, 42) ein erstes adsorptives Trocknungsbett (4a), mittels welchem zumindest ein Teil des Einsatzwassers aus dem Prozessgasstrom (102) entfernt wird, ein stromab des ersten Trocknungsbetts (4a) angeordnetes katalytisches Bett (4b), mittels welchem die katalytische Umsetzung durchgeführt wird, und ein stromab des katalytischen Bettes angeordnetes zweites adsorptives Trocknungsbett (4c), mittels welchem zumindest ein Teil des Oxidationswassers aus dem Prozessgasstrom (102) entfernt wird, aufweist.

2. Verfahren (100) nach Anspruch 1, bei dem der Prozessgasstrom (102) der einen oder den mehreren Prozesseinheiten (41, 42) auf einem Einspeisetemperaturniveau von 10 bis 50 °C und insbesondere auf einem Einspeisedruckniveau von 10 bis 40 bar über Atmosphärendruck zugeführt wird.

3. Verfahren (100) nach Anspruch 2, bei dem das Bilden des Prozessgasstroms ein Abkühlen des Kathodengases (101) oder eines Teils hiervon von einem Temperaturniveau von 50 bis 80 °C auf das Einspeisetemperaturniveau und ein kondensatives Abscheiden von Wasser umfasst.

4. Verfahren (100) nach einem der vorstehenden Ansprüche, bei dem der Prozessgasstrom (102) wassergesättigt bereitgestellt wird.

5. Verfahren (100) nach einem der vorstehenden Ansprüche, bei dem der Prozessgasstrom (102) mit einem Sauerstoffgehalt von 20 bis 500 Millionstel Volumenanteilen bereitgestellt wird.

6. Verfahren (100) nach einem der vorstehenden Ansprüche, bei dem die Elektrolyse (10) als eine alkalische Elektrolyse durchgeführt wird oder eine solche umfasst und/oder dem die Elektrolyse (10) als Elektrolyse unter Verwendung einer Protonenaustauschmembran durchgeführt wird oder eine solche umfasst.

7. Verfahren (100) nach einem der vorstehenden Ansprüche, bei dem wenigstens zwei der Prozesseinheiten (41, 42) bereitgestellt sind, welche zyklisch mit dem Prozessgasstrom (102) oder Teilen hiervon durchströmt werden.

8. Verfahren (100) nach einem der vorstehenden Ansprüche, bei dem das erste Trocknungsbett (4a) und das zweite Trocknungsbett (4c) ein zur Adsorptionstrocknung eingerichtetes Material aufweisen.

9. Verfahren (100) nach einem der vorstehenden Ansprüche, bei dem der Wassergehalt in dem Prozessgasstrom (102) unter Verwendung des ersten Trocknungsbetts (4c) auf einen Gehalt von weniger als 100 Millionstel Volumenanteilen verringert wird.

10. Anlage (100) zur Erzeugung von Wasserstoff, wobei die Anlage (100) dafür eingerichtet ist, Einsatzwasser unter Erhalt eines Kathodengases (101) einer Elektrolyse (10) zu unterwerfen, wobei das Kathodengas (101) Wasserstoff, Sauerstoff und einen Teil des Einsatzwassers enthält, unter Verwendung zumindest eines Teils des Kathodengases (101) einen Prozessgasstrom (102) zu bilden, wobei der Prozessgasstrom (102) zumindest einen Teil des in dem Kathodengas (101) enthaltenen Wasserstoffs, Sauerstoffs und Einsatzwassers enthält, in dem Prozessgasstrom (102) zumindest einen Teil des Sauerstoffs mit einem Teil des Wasserstoffs einer oxidativen katalytischen Umsetzung zu Oxidationswasser zu unterwerfen, und das Einsatzwasser und das Oxidationswasser in einer Wasserentfernung zumindest zu einem Teil aus dem Prozessgasstrom (102) zu entfernen, **dadurch gekennzeichnet, dass** die Anlage (100) dafür eingerichtet ist, die katalytische Umsetzung und die Wasserentfernung unter Verwendung einer oder mehrerer Prozesseinheiten (41, 42) durchzuführen, wobei die eine Prozesseinheit (41, 42) oder jede der mehreren Prozesseinheiten (41, 42) ein erstes adsorptives Trocknungsbett (4a), das zur Entfernung zumindest eines Teils des Einsatzwassers aus dem Prozessgasstrom (102) eingerichtet ist, ein stromab des ersten Trocknungsbetts (4a) angeordnetes katalytisches Bett (4b), das zur Durchführung der katalytischen Umsetzung eingerichtet ist, und ein stromab des katalytischen Bettes angeordnetes zweites adsorptives Trocknungsbett (4c), das zur Entfernung zumindest eines Teils des Oxidationswassers aus dem Prozessgasstrom (102) eingerichtet ist, aufweist.

11. Anlage (100) nach Anspruch 10, die zur Durchführung eines Verfahrens nach einem der Ansprüche 1 bis 9 eingerichtet ist.
